Europäisches Patentamt

European Patent Office

Office européen des brevets

(11) Veröffentlichungsnummer: **0 208 982**
**B1**

(12) **EUROPÄISCHE PATENTSCHRIFT**

(45) Veröffentlichungstag der Patentschrift: **12.09.90**

(51) Int. Cl.⁵: **H 04 L 27/14**

(21) Anmeldenummer: **86108897.9**

(22) Anmeldetag: **30.06.86**

(54) **Digitale Filterweiche, insbesondere für einen Datenempfänger.**

(30) Priorität: **03.07.85 DE 3523841**

(43) Veröffentlichungstag der Anmeldung:
**21.01.87 Patentblatt 87/04**

(45) Bekanntmachung des Hinweises auf die
Patenterteilung:
**12.09.90 Patentblatt 90/37**

(84) Benannte Vertragsstaaten:
**AT BE CH DE FR GB IT LI NL**

(56) Entgegenhaltungen:
**US-A-3 689 844**
**US-A-3 803 501**
**US-A-3 858 117**

(73) Patentinhaber: **Siemens Aktiengesellschaft**
**Wittelsbacherplatz 2**
**D-8000 München 2 (DE)**

(72) Erfinder: **Prohaska, Bernd, Dipl.-Ing.**
**Feichtholzweg 18**
**D-8031 Gilching (DE)**
Erfinder: **Schwartz, Hans-Dieter, Dr.-Ing.**
**Wilhelm-Busch-Strasse 41**
**D-8000 München 71 (DE)**
Erfinder: **Winkelmann, Rudolf, Dipl.-Ing.**
**Konrad-Witz-Strasse 14**
**D-8000 München 71 (DE)**
Erfinder: **Zettl, Gerhard, Dipl.-Ing.**
**Zypressenweg 9**
**D-8011 Kirchheim (DE)**

Courier Press, Leamington Spa, England.

**Beschreibung**

Die Erfindung betrifft eine digitale Filterweiche gemäß dem Oberbegriff des Patentanspruches.

Aus der US—PS—3 689 844 ist es bekannt, eine etwas andersartige Filterweiche zu verwenden. Es gibt dort keinen Hinweis dafür, einen Quadrierer zu verwenden, weil hierfür eine technische Notwendigkeit nicht besteht. Verwendet werden dort aber Gleichrichter. Um mit den Problemen der Gleichrichter zurechtzukommen, wird dort die Abtastfrequenz in besonderer Weise gewählt. Dies ist nur bei schmalbandigen Signalen möglich. Schmalbandig heißt dabei "schmal" im Vergleich zur Abtastfrequenz. Auf diese Weise fallen Überfaltungen in nicht störende Spektralbereiche.

Aus der US—PS 3 852 117 ist eine Anordnung bekannt, bei der ein Umsetzer (Mixer) verwendet wird, um mit gleichen Bandpässen bei gleicher Signalverzögerung die Signale weiterverarbeiten zu können. Dort sind nur Schaltungen für die Analogtechnik angegeben. Schon aus diesem Grund gibt es andersartige Probleme als beim Anmeldungsgegenstand. Es werden dort zwar Quadrierer verwendet, jedoch für analoge Signale. Damit soll aber das Verhalten der Schaltung bei Störungen verbessert werden. Drei Tiefpässe sind nötig, weil das umgesetzte Signal in Kehrlage erscheint und der Bandpaß naturgemäß eine gewisse Unsymmetrie aufweist, die einen Ausleich erfordert.

Möglichkeiten zur Realisierung digitaler Datenempfänger sind beispielsweise in der Zeitschrift NTZ Band 36 (1983), Heft 12, Seiten 806 bis 808 angegeben, wo unter dem Titel "Ein digitaler Demodulator für äqudistant abgetastete FM-Signale" ein Verfahren zur digitalen FM-Demodulation beschrieben wird. In der Zeitschrift IEEE Trans. Communications COM-29 (1981), Heft 7, S. 1061 und in der Zeitschrift NTZ, Bd. 37 (1984), Heft 7, S. 414 sind digitale Nulldurchgangsdetektoren angegeben, die ebenfalls zum Aufbau von Datenempfängern verwendet werden könnten. Die vorerwähnten Verfahren führen bei der Realisierung jedoch zu einem verhältnismäßig großen Schaltungsaufwand.

Der Erfindung liegt die Aufgabe zugrunde, Möglichkeiten zur Realisierung eines Datenempfängers unter Verwendung einer digitalen Filterweiche anzugeben, bei der der Schaltungsaufwand möglichst klein gehalten werden kann.

Diese Aufgabe wird für eine digitale Filterweiche gemäß dem Oberbegriff des Patentanspruches erfindungsgemäß nach den kennzeichnenden Merkmalen des Patentanspruches gelöst.

Als möglicher Anwendungsfall sei hier erwähnt, daß die Datenübertragung z.B. beim Mobil-Telefon mit Hilfe der FFSK (*Fast Frequency Shift Keying*) erfolgt, einem Modulationsverfharen, welches eine Datenrate von 1200 Bd (Baud) gewährleistet. Ein Schwingungszug mit beispielsweise einer Frequenz $f_T = 1200$ Hz (Trennfrequenz) entspricht dabei dem Zustand der logischen "1", und passend dazu entsprechen eineinhalb Schwingungszüge einer Frequenz $f_z = 1800$ Hz (Zeichenfrequenz) dem der logischen "0". Um die Fehlerrate beim Datenempfang möglichst klein zu halten, werden folgende Anforderungen an den Datenempfänger gestellt.

Es muß die Linearphasigkeit (konstante Gruppenlaufzeit) der verwendeter Filter im Durchlaßbereich und an dessen Grenzen gewährleistet sein. Unterschiedliche Laufzeiten würden zu isochronen Verzerrungen führen. Es muß eine geringe Einschwingzeit der Filter und damit geringe Schrittverzerrungen und schnelle Einsynchronisation sichergestellt sein, auch sollen eine große vertikale Augenöffnung und daher größere Unempfindlichkeit gegenüber AM-Störungen (Amplitudenmodulation) und Rauschen gegeben sein, weiterhin sollen große horizontale Augenöffnung und Nulldurchgänge in einem Punkt sein, da der Entscheidertakt des dem Datenempfänger nachgeschalteten Entscheiders über die Nulldurchgänge synchronisiert wird. Schließlich soll auch bezüglich der Nullinie ein symmetrisches Auge auftreten, da ein konstanter Eingangspegel durch die Übertragungsstrecke (Funkfeld) nicht gegeben ist; ein pegelabhängiger "Nullinienoffset" würde sonst pegelabhängige Entscheiderschwellen erfordern. Erfolgt die Realisierung beispielhaft mittels eines Prozessors, dann is auch wünschenswert eine geringe Prozessorbelastung, worunter die Anzahl der abzuarbeitenden Befehle zwischen zwei Abtastzeitpunkten bezogen auf die maximale Anzahl der ausführbaren Befehle zwischen zwei Abtastzeitpunkten zu verstehen ist und es soll auch nur ein geringer Speicherplatzbedarf (RAM, Koeffizienten-ROM, Programm-ROM) erforderlich sein.

Anhand von Ausführungsbeispielen wird nachstehend die Erfindung noch näher erläutert.

Es zeigen in der Zeichnung

Fig. 1 den Aufbau eines Demodulators mit einer digitalen Filterweiche einschließlich eines vorgeschalteten Analog-Digital-Wandlers und eines nachgeschalteten Entscheiders 2,

Fig. 2 als Beispiel ein digitales Filter und zwar ein Transversalfilter vom Grad 3 mit drei Verzögerungsgliedern von jeweils der Verzögerungszeit T,

Fig. 3a bzw. 3b den Kurvenverlauf $e_1(t)$ und $e_2(t)$ in Abhängigkeit von der Zeit $n \times T$ bei Sinuspulserregung, es ist dabei $e_1(t)$ ein Schwingungszug der Trennfrequenz $f_1$ und $e_2(t)$ ein Schwingungszug der Zeichenfrequenz $f_2$,

Fig. 4a bzw. 4b den Absolutbetrag der Spektren $E_1(f)$ und $E_2(f)$ in Abhängigkeit von der Frequenz bei Erregung des Datenempfängers mit Sinuspulsen nach den Fig. 3a/b, das Symbol "Leerkreis/Vollkreis" zeigt die übliche mathematische Darstellung für den Übergang von einem Zeitbereich in einen Frequenzbereich,

Fig. 5 den Dämpfungsverlauf der Bandpässe $a_{BP}$ in Abhängigkeit von der Frequenz f und zwar zeigt die gestrichelte Kurve den Dämpfungsverlauf für den Bandpaß $BP_1$ und die ausgezogene Kurve den Verlauf für den Bandpaß $BP_2$ (Bezugsziffern 3 und 4 in Fig. 1)

Fig. 6 den Dämpfungsverlauf $a_{TP}$ des Tiefpasses 7 in Abhängigkeit von der Frequenz f,

Fig. 7a den Verlauf des Ausgangspulses $a_1(t)$ in Abhängigkeit von der Zeit nT bei Erregung mit der Eingangsspannung $e_1(t)$ gemäß Fig. 3a,

Fig. 7b den Verlauf des Ausgangspulses $a_2(t)$ bei Erregung mit der Eingangsspannung $e_2(t)$ gemäß Fig. 3b,

Fig. 8 ein Augendiagramm a(t) in Abhängigkeit von der Zeit nT bei Erregung mit einer ungestörten Einzelpulsfolge.

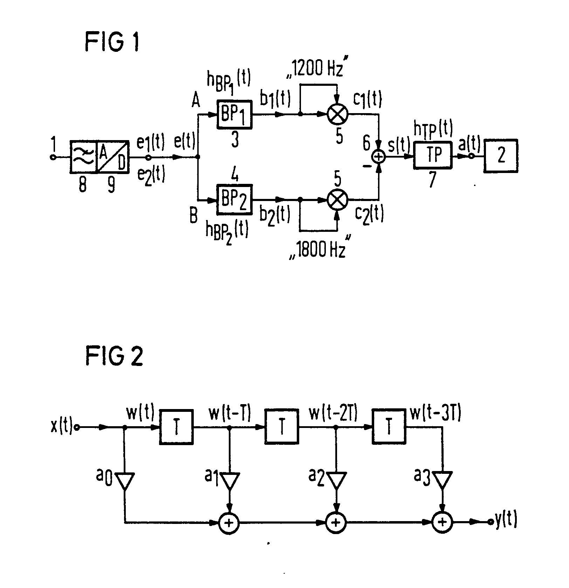

Im Blockschaltbild der Fig. 1 ist zu erkennen ein mit der Bezugsziffer 1 bezeichneter Eingang, dem ein sogenannter Antialiasing-Tiefpaß 8 nachgeschaltet ist, dem ein Analog-Digital-Wandler 9 folgt. Der Tiefpaß 8 dient also dazu, periodische Dämpfungseinbrüche zu verhindern. Nach dem Analog-Digital-Wandler 9 werden die Signale bereits in digitaler Form als Eingangssignale e(t) abgegeben. Die speziellen Eingangssignale sind mit $e_1(t)$ und mit $e_2(t)$ bezeichnet. Für die Signale ist ein erster Weg vorgesehen, der in der Fig. 1 mit A bezeichnet ist, sowie ein zweiter Weg, der in der Fig. 1 mit B bezeichnet ist. Im Weg A ist als Beispiel ein "1200 Hz-Weg" kenntlich gemacht und im Weg B als Beispiel ein "1800 Hz-Weg" angegeben. In beiden Wegen sind zu erkennen die Bandpässe 3 bzw. 4, die mit $BP_1$ bzw. $BP_2$ bezeichnet sind und die jeweils die Impulsantworten $h_{BP1}(t)$ bzw. $h_{BP2}(t)$ haben. An ihren Ausgängen erscheinen die Signale $b_1(t)$ bzw. $b_2(t)$. An die Bandpässe 3 bzw. 4 schließen die Quadrierer 5 bzw. 5' an, was symbolisch so kenntlich gemacht ist, daß die Signale $b_1(t)$ bzw. $b_2(t)$ über einen ersten und über einen zweiten zweiten Eingang auf die mit Multiplizierern dargestellten Quadrierer 5 bzw. 5' gegeben werden. Der Quadrierer 5 liefert ein mit $c_1(t)$ bezeichnetes Ausgangssignal, während der Quadrierer 5' ein mit $c_2(t)$ bezeichnetes Ausgangssignal liefert. Diese beiden Ausgangssignale werden einem Addierer 6 zugeführt, von dem durch das mitgezeichnete Minuszeichen kenntlich gemacht wird, daß dort ein Subtraktionsvorgang vorgenommen wird. Das Ausgangssignal des Summierers 6 ist mit s(t) bezeichnet und durchläuft anschließend einen Tiefpaß 7 (TP), der die Impulsantwort $h_{TP}(t)$ hat. Am Ausgang des Tiefpasses 7 erscheint das Ausgangssignal a(t). Dieses Ausgangssignal wird einem Entscheiderteil 2 zugeführt, der über die Nulldurchgänge des Basisbandsignals a(t) den Entscheidertakt synchronisiert und die Nachricht ausgibt. Der Aufbau dieses Entscheiderteiles braucht hier nicht näher erläutert zu werden, da er für das Verständnis der Erfindung nicht von Bedeutung ist.

Es wird hier mit $f_1$ die Trennfrequenz und mit $f_2$ die Zeichenfrequenz bezeichnet. Der Bandpaß 3 ist also auf die Trennfrequenz $f_1$ abgestimmt während der Bandpaß 4 auf die Zeichenfrequenz $f_2$ abgestimmt ist. Das Eingangssignal e(t) gelangt also zunächst über die beiden auf die Frequenzen $f_1$ bzw. $f_2$ abgestimmten Bandpässe 3 und 4 und wird anschließend auf beiden Wegen zur Umsetzung ins Basisband quadriert. Anschließend werden die beiden Signale $c_1(t)$ und $c_2(t)$ voneinander subtrahiert und nachfolgend durch den Tiefpaß 7 (TP) von den Oberwellen befreit. Anders als im zeitkontinuierlichen Fall können amplitudenmodulierte Störungen, die dem frequenzmodulierten Signal überlagert sind, im zeitdiskreten Fall nicht durch einen Amplitudenbegrenzer unterdrückt werden. Eine Begrenzung des digitalen Signals würde einerseits einen Informationsverlust und damit zusätzlich Unsicherheit bei der Entscheidertaktgewinnung bedeuten, im Extremfall "1-Bit"-Auflösung; andererseits hat man es mit einem abgetasteten System niedriger Abtastfrequenz, z.B. 10.8 KHz, zu tun, d.h. durch eine Amplitudenbeschneidung würden hochfrequente, mit l/f abfallende Spektralanteile erzeugt, die sich in das Nutzband herunterfalten (aliasing). Es werden deshalb für die Umsetzung in das Basisband keine Gleichrichter, also Betragsbildner, sondern nur Quadrierer verwendet, bei denen lediglich eine Frequenzverdoppelung erfolgt. Zusätzlich können die Übertragungsfunktionen der beiden Bandpässe 3 und 4 zusammen mit den Quadrierern 5, 5' so aufeinander abgestimmt werden, daß nurmehr ein Tiefpaß 7 erforderlich ist, der das Signal s(t) formt und die oberen Spektralanteile unterdrückt. Es muß dann auch der Tiefpaß 7 in seiner Bemessung auf die Bemessung der beiden Bandpässe 3 und 4 abgestimmt sein und zwar derart, daß am Ausgang des Tiefpasses 7 bei einer eingangsseitigen Erregung mit Schwingungszügen der Zeichenfrequenz $f_1$ bzw. der Trennfrequenz $f_2$ von der Zeitdauer von jeweils einer Zeichenlänge sich entgegengesetzt gleiche Pulse ergeben, deren Vor- und Nachschwinger zu den Entscheidungszeitpunkten zeitlich benachbarter Zeichen Nulldurchgänge aufweisen.

In welcher Weise digitale Filter zu realisieren sind, ist an sich bekannt, so daß also für den Aufbau einer Schaltung nach Fig. 1 an sich beliebige digitale Filter verwendet werden können. Eine spezielle Gattung unter den digitalen Filtern sind bekanntlich die sogenanten Transversalfilter, für die in Fig. 2 beispielhaft ein Filter vom Grad 3 dargestellt ist. Es können also die Bandpässe 3 und 4 und auch der Tiefpaß 7 gemäß Fig. 2 aufgebaut und aufeinander abgestimmt werden, so daß sie die vorgenannte Bedingung erfüllen.

Das in Fig. 2 dargestellte Filter wird als Transversalfilter bzw. als nichtrekursives Filter bezeichnet. Es besteht aus drei Verzögerungsgliedern mit der Verzögerungszeit T, die gewissermaßen in Kette geschaltet sind. Am Eingang wird ein Signal x(t) eingespeist, das das Filter am Ausgang als Signal y(t) verläßt. Kenntlich gemacht sind die Signale w(t), w(t-T), w(t-2T) und w(t-3T), die jeweils über die Bewerter $a_0$, $a_1$, $a_2$ und $a_3$ den mit "+" kenntlich gemachten Summierern zugeführt werden. Wenn z.B. die Koeffizienten eines solchen Filters gewisse Symmetrieeigenschaften erfüllen, dann kann der Forderung nach einem linearen Phasenverlauf Rechnung getragen werden.

Zur Realisierung der Bandpässe 3, 4 und des Tiefpasses 7 kan nun folgendermaßen vorgegangen werden.

Beide Bandpässe 3 und 4 werden durch Optimierung im Frequenzbereich so aufeinander abgestimmt, daß bei eingangsseitiger Sinuspulserregung mit der Trennfrequenz $f_1$ bzw. mit der Zeichenfrequenz $f_2$ (im Beispiel 1200 Hz bzw. 1800 Hz) mit der Dauer einer Zeichenlänge in beiden Fällen die Sprektren am Summiererausgang 6 im Bereich von 0 Hz bis $2f_N$ (1200 Hz = doppelte Nyquistfrequenz) übereinstimmen. Der nachgeschaltete Tiefpaß 7 unterdrückt die hochfrequenten Spektralanteile über 1.2 kHz und formt das Spektrum punktsymmetrisch zu einem breiten Nyquistspektrum bezüglich der Nyquistfrequenz von $f_N$ = 600 Hz (der Nyquistfrequenz entspricht die Grundfrequenz einer 1:1 Pulsfolge mit der Impulsdauer von der halben Baudrate). Die einem Nyquistspektrum zugeordnete Zeitfunktion besitzt wie eine sinx/x-Funktion an allen vorausgehenden und nachfolgenden Entscheidungszeitpunkten Nulldurchgänge. Im vorliegenden Fall erfolgt wegen der Quadrierer zwar keine lineare Überlagerung der Einzelerregungen (*nicht*lineares System), aber aufgrund des günstigen Einschwingverhaltens bleibt, wie Rechnungen zeigen, das Impulsnebensprechen bei Erregung mit einer Sinuspulsfolge vernachlässigbar gering.

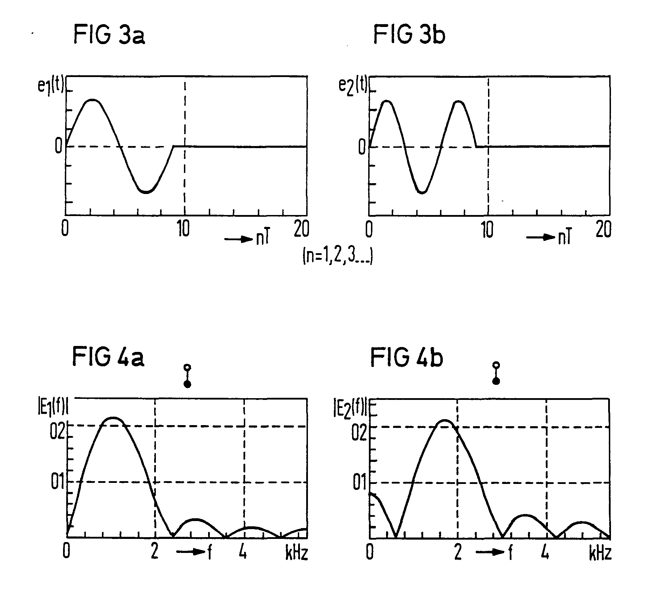

Für die Fig. 3a und 3b und für die Fig. 4a und 4b gelten folgende Überlegungen.

Ausgehend von den eingangsseitigen Erregungspulsen nach den Fig. 3a und 3b

$$e_1(t) = \text{rect }(t/t_s) \cdot \sin (2\pi f_1 t)$$

$$\text{bzw.} \tag{1}$$

$$e_2(t) = \text{rect }(t/t_s) \cdot \sin (2\pi f_2 t)$$

mit

$$f_1 = 1200 \text{ Hz} \qquad \text{Trennfrequenz}$$

$$f_2 = 1800 \text{ Hz} \qquad \text{Zeichenfrequenz}$$

$$t_s = 1/1200 \text{ Bd} \qquad \text{Schrittlänge}$$

und deren Spektren $|E_1(f)|$ und $|E_2(f)|$ nach den Fig. 4a und 4b

$$E_1(f) = j \cdot \text{si}(\pi f t_s) * [\delta(f - f_1) - \delta(f - f_1)] \cdot e^{-j\pi f t_s}$$

$$\text{bzw.} \tag{2}$$

$$E_2(f) = \text{si}(\pi f t_s) * [\delta(f - f_2) + \delta(f + f_2)] \cdot e^{-j\pi f t_s}$$

(mit * Faltungsoperator)

erhält man das Spektrum nach dem Summierer 6, (vgl. Fig. 1) zu:

$$S(f) = C_1(f) - C_2(f) \tag{3}$$

mit

$$C_v (f) = B_v(f) * B_v(f) = [H_{BPv}(f) \cdot E_v(f)] * [H_{BPv}(f) \cdot E_v(f)]$$

für $v$ = 1, 2 Erregung bei Trenn- bzw. Zeichenfrequenz Der nachgeschaltete Tiefpaß 7 unterdrückt (im Beispiel der Fig. 1) die höherfrequenten Spektralanteile ab etwa 1.2 kHz; spektrale Gleichheit ist daher nur in einem Bereich bis zu etwa 1.2 kHz erforderlich.

Hinsichtlich einer sinnvollen Optimierung können die, für die Berechnung von $S(f)$ notwendigen, aus Gleichung (2) und (3) ersichtlichen, Faltungsoperationen nur an einigen wenigen Frequenzpunkten erfolgen. Betrachtet man in Fig. 4a/b die Betragsspektren $|E_1(f)|$ und $|E_2(f)|$ der Einzelpulse, so genügt offensichtlich ein Frequenzraster $\Delta f$ von 300 Hz. Die Faltung erfolgt somit nur an den vier Frequenzpunkten 0 Hz, 300 Hz, 600 Hz und 900 Hz, wobei jeweils nur neun Spektralanteile (300 Hz, 600 Hz . . . 2700 Hz) von $B(f)$ in Gleichung (3) berücksichtigt werden. Spektralanteile des Eingangsspektrums unter 300 Hz werden und durch die Bandpässe 3 ($BP_1$) und 4 ($BP_2$) unterdrückt, solche über 2700 Hz können vernachlässigt werden, weil die Bandpässe dort sperren.

Wenn man eine Erregung mit den Funktionen $e_1(t)$ und $e_2(t)$ gemäß Fig. 3a und Fig. 3b vornimmt, dann läßt sich eine Dimensionierung der Bandpässe 3 und 4 so vornehmen, daß die Spektren $S_1(f)$ und $S_2(f)$ am Ausgang des Summierers 6 gleich groß werden. Auch ist es möglich, die Schaltung so zu dimensioneren, daß für eine "minimale Energie im anderen Weg" gesorgt wird.

Bei eingangsseitiger Erregung mit $e_1(t)$ bzw. $e_2(t)$ (Fig. 3a/b) soll möglichst viel Energie (spektrale Nullkomponente von $C(f)$) durch den Nutzkanal, möglichst wenig Energie dagegen durch den anderen Kanal übertragen werden. Die Zielfunktionen für die Optimierung lauten somit:

$$N_1 = \left| \frac{C_{2\mu}(f)}{C_{1\mu}(f)} \right| \cdot K_1 \overset{!}{=} 0 \qquad\qquad (4)$$

$$N_2 = \left| \frac{C_{1\mu}(f)}{C_{2\mu}(f)} \right| \cdot K_2 \overset{!}{=} 0$$

mit $\mu = 1, 2$      Erregungsindex (Trenn- bzw. Zeichenfrequenz)
     $N_1$            Störkomponente 1200-Hz-Weg
     $N_2$            Störkomponente 1800-Hz-Weg
     $K_1, K_2$      Gewichtungsfaktoren

Auch läßt sich eine große Nyquistkomponente bei einer Wechselfolge 1:1 erreichen. Bei Einspeisung einer 1:1-Wechselfolge am Demodulatoreingang 1 soll im Beispiel die Nyquistkomponente (bei $f_N$ = 600 Hz) von $S(f)$ am Ausgang des Summierers möglichst groß im Vergleich zur Nullkomponente von $S(f)$ werden. Dadurch wird in vorteilhafter Weise das Augendiagramm symmetrisch bezüglich der Nullinie; ein vom Signalpegel abhängiger "Nullinienoffset" (Funkübertragungsstrecke) würde sonst ein signalpegelabhängiges Nachziehen der Entscheiderschwellen erfordern.

Weiterhin erstrebt man im Beispiel einen punktsymmetrischen und linearen Verlauf der Diskriminatorkennlinie bezüglich der Mittenfrequenz $f_M$ = 1.5 kHz sowie gleiche Auslenkung bei Dauertonerregung mit 1200 Hz (Trennfrequenz) bzw. 1800 Hz (Zeichenfrequenz) mit der Forderung:

$$\text{DISK} = \left\{ \left[ \frac{1}{|C_1(f)|^2} - \frac{1}{|C_2(f)|^2} \right]_{f=f_1} - \left[ \frac{1}{|C_1(f)|^2} - \frac{1}{|C_2(f)|^2} \right]_{f=f_2} \right\} \cdot K \overset{!}{=} 0$$

mit $f_1$ = 1200 Hz          Trennfrequenz                            (5)
     $f_2$ = 1800 Hz          Zeichenfrequenz
     $K$      Gewichtungsfaktor ;

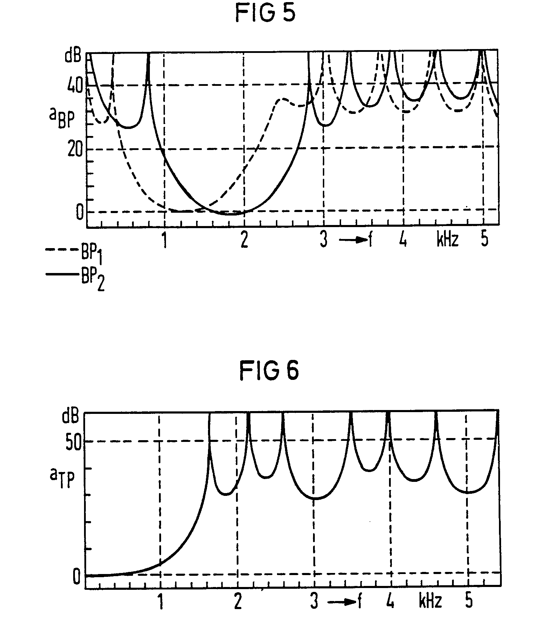

In den Fig. 5 und 6 ist in Abhängigkeit von der Frequenz f die Dämpfung $a_{BP}$ der Bandpässe 3 und 4 (Bandpaß 3 ist gestrichelt und Bandpaß 4 ist ausgezogen gezeichnet) sowie die Dämpfung $a_{TP}$ des Tiefpasses 7 dargestellt. Wie schon dem Kurvenverlauf zu entnehmen ist, haben diese Filter bei der praktischen Realisierungsform einen höheren Filtergrad als dies in Fig. 2 aus Gründen der besseren Übersicht unmittelbar dargestellt ist. Im Ausführungsbeispiel wurden die Bandpässe 3 ($BP_1$) und 4 ($BP_2$) so bestimmt, daß für den Bandpaß 3 bei der Frequenz 1200 Hz bzw. für den Bandpaß 4 bei der Frequenz 1200 Hz die Dämpfung minimal wird. Entsprechend optimieren läßt sich auch der Tiefpaß 7.

Um beispielsweise ein Impulsnebensprechen zu vermeiden, formt der Tiefpaß 7 das Spektrum $S(f)$ zu einem Nyquistspektrum $A(f)$ (Nulldurchgänge bei benachbarten Entscheidungszeitpunkten) bezüglich der Nyquistfrequenz $f_N$ = 600 Hz um. Dabei soll im Hinblick auf ein schnelles zeitliches Abklingen der Überschwinger (nichtlineares System) der an sich bekannte "roll-off"-Faktor r nahe bei 1 zu liegen kommen. Dies bedeutet, daß das Spektrum $S(f)$ in einem möglichst breiten Frequenzbereich (bis max. 2 $f_N$) zu einem Nyquistspektrum geformt wird.

Bezüglich der Sperrbereichsforderung sollte beim Tiefpaß 7 folgendes beachtet werden.

Der Tiefpaß 7 soll daneben noch die bei der Quadrierung entstandenen, hochfrequenten Spektralanteile von $S(f)$ unterdrücken. Diese erscheinen besonders deutlich im Bereich der doppelten Trenn- und Zeichenfrequenz. Im übrigen ist der Tiefpaß 7 so ausgeführt daß er bei der Frequenz Null die Dämpfung Null dB hat.

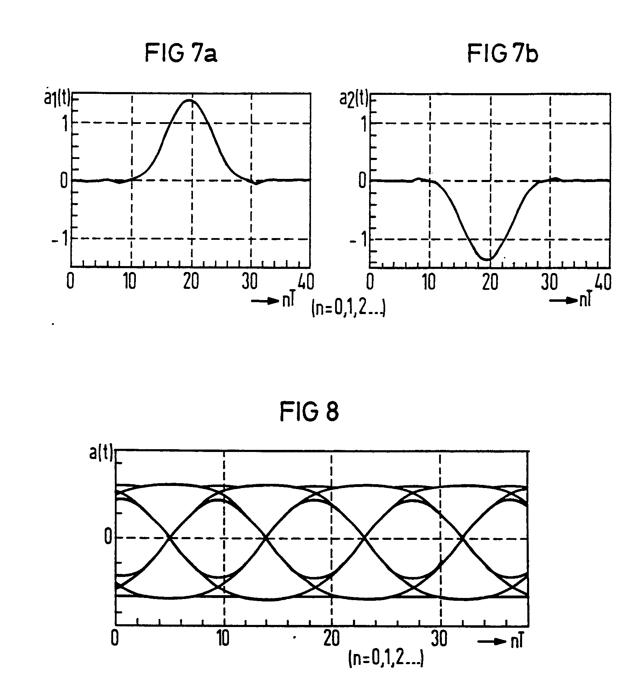

In den Fig. 7a und 7b ist noch das Verhalten des Demodulators bei ungestörter Einzelpulserregung dargestellt. In den Figuren ist als Abszisse die Zeit nT aufgetragen und die Ordinate zeigt die Funktion $a_1(t)$ bzw. $a_2(t)$. Die Erregung erfolgt dabei mit Einzelpulsen $e_1(t)$ bzw. $e_2(t)$ nach den Fig. 3a bzw. 3b. Eine Untersuchung der Spektren am Ausgang des Datenempfängers zeigt, daß ein rasches zeitliches Abklingen der Überschwinger gewährleistet ist und daß ein "roll-off"-Faktor von r = 0,95 auftritt.

Das Verhalten bei ungestörter Einzelpulsfolge, also bei Textübertragung, läßt sich ebenfalls zeigen. Hierzu ist in Fig. 8 das Augendiagramm a(t) in Abhängigkeit von der Zeit nT dargestellt.

Das Augendiagramm gibt Aufschluß über das Einschwingverhalten und die Dämpfungsverzerrungen des Datenempfängers bei Erregung mit einer Einzelpulsfolge; diese soll nach Möglichkeit so aufgebaut sein, daß in ihr alle möglichen Übergangskombinationen zwischen Trenn- und Zeichenfrequenz ($f_1$ und $f_2$) enthalten sind. Alle im Datenempfänger verwendeten Filter sind nichtrekursiv; ein Abtastwert hat nach endlicher Zeit die Laufzeitketten vom Eingang zum Ausgang durchlaufen. Ein Einzelimpuls ist bei einer Datenrate von 1200 Bd und einer Abtastfrequenz von 10800 Hz genau neun Abtastzeitpunkte lang. Es genügt daher ein Text endlicher Länge, bei dem sämtliche Übergangsmöglichkeiten einer genügend langen Einzelpulsfolge vorkommen, zu erzeugen. Einen derartigen Text erhält man am einfachsten mit Hilfe pseudozufälliger, periodischer Binärfolgen.

Exakte Nulldurchgänge und große horizontale Augenöffnungen gewährleisten minimalen Aufwand bei der Entscheidertaktgewinnung. Die Symmetrie der Augenöffnung bezüglich der Nullinie stellt sicher, daß auch bei schwankendem Eingangspegel die Nullinie immer die optimale Entscheiderschwelle bildet. Aufgrund der Sperrforderungen beim Tiefpaßentwurf konnte auch bei Dauertonauslenkung mit Trenn- und Zeichenfrequenz die Welligkeit des Ausgangssignals klein gehalten werden. Allerdings konnte eine Symmetrie des Ausgangssignals bei Dauertonauslenkung unter gleichzeitiger Beibehaltung einer großen vertikalen Augenöffnung nicht erzielt werden.

Eine weitere günstige Eigenschaft des Demodulators sei noch erwähnt. Nach dem ersten Nulldurchgang des Tiefpaßausgangssignals kann sich der Demodulator einsynchronisieren, d.h. bereits nach dem ersten empfangenen Zeichen. Lange Anfangstelegramme können somit für die Einsynchronisation entfallen und die eigentliche Datenübertragung kann effektiver gestaltet werden.

**Patentanspruch**

Digitale Filterweiche, insbesondere für einen Datenempfänger, die einen Analog-Digital-Wandler (9) enthält und bei der die Digitalsignale nach dem Analog-Digital-Wandler (9) in einen ersten Weg (A) und in einen zweiten Weg (B) durch entsprechend zugeordnete digitale Bandpässe (3, 4) aufgespalten werden und diese beiden Wege (A, B) über einen Summierer (6) zusammengeschaltet sind, dem ein digitaler Tiefpaß (7) nachfolgt, dadurch gekennzeichnet, daß jedem der Bandpässe (3, 4) ein Quadrierer (5, 5') nachgeschaltet ist und daß die beiden Bandpässe (3, 4) und der Tiefpaß (7) in ihrer Bemessung aufeinander abgestimmt sind, derart, daß am Ausgang des Tiefpasses (7) bei eingangsseitiger Erregung mit Schwingungszügen der Zeichenfrequenz ($f_1$) bzw. der Trennfrequenz ($f_2$) von der Zeitdauer von jeweils einer Zeichenlänge, sich entgegengesetzt gleiche Pulse ergeben, deren Vor- und Nachschwinger zu den Entscheidungszeitpunkten zeitlich benachbarter Zeichen Nulldurchgänge aufweisen.

**Revendication**

Filtre séparateur numérique, notamment pour un récepteur de données, qui contient un convertisseur analogique/numérique (9) et dans lequel les signaux numériques sont répartis, en aval du convertisseur analogique/numérique (9), entre une première voie (A) et une seconde voie (B) passant par deux filtres passe-bande numériques associés de façon correspondante (3, 4) et les deux voies (A, B) sont réunies par l'intermédiaire d'un additionneur (6), en aval duquel est branché un filtre passe-bas numérique (7), caractérisé par le fait qu'un circuit d'élévation au carré (5, 5') est branché en aval de chacun des filtres passe-bande (3, 4), et que les deux filtres passe-bande (3, 4) et le filtre passe-bas (7) ont des dimensions réglées les unes sur les autres de telle sorte que lors de l'excitation réalisée sur le côté entrée avec des trains d'oscillations possédant la fréquence des signaux ($f_1$) ou la fréquence de coupure ($f_2$) et une durée égale respectivement à une longueur de signal, on obtient, sur la sortie du filtre passe-bas (7), on obtient des impulsions identiques et de signes opposés, dont les pré-oscillations et les post-oscillations présentent des points d'annulation aux instants de discrimination de signaux voisins dans le temps.

**Claim**

Digital branch filter, particularly for a data receiver, which contains an analog/digital converter (9) and in which the digital signals are split by appropriately allocated digital band-pass filters (3, 4) into a first path (A) and into a second path (B) after the analog/digital converter (9) and these two paths (A, B) are connected together via a summing element (6) which is followed by a digital low-pass filter (7), characterized in that each of the band-pass filters (3, 4) is followed by a squaring circuit (5, 5') and in that the two band-pass filters (3, 4) and the low-pass filter (7) are matched to one another in their dimensioning in such a manner that when the input is excited with wave trains of the mark frequency ($f_1$) and of the space frequency ($f_2$), respectively, of the duration of in each case one symbol length, at the output of the low-pass filter (7) oppositely identical pulses are obtained, the pre- and post-pulse ringing of which exhibits zero transitions at the decision times of symbols which are adjacent to one another in time.

FIG 1

FIG 2

FIG 3a

FIG 3b

(n=1,2,3...)

FIG 4a

FIG 4b

## FIG 5

## FIG 6

## FIG 7a

## FIG 7b

## FIG 8